## Europäisches Patentamt

## European Patent Office

## Office européen des brevets

(11) Veröffentlichungsnummer: **0 253 180 B1**

(12) **EUROPÄISCHE PATENTSCHRIFT**

(45) Veröffentlichungstag der Patentschrift: **04.09.91**

(51) Int. Cl.5: **G01P 15/125**

(21) Anmeldenummer: **87109268.0**

(22) Anmeldetag: **27.06.87**

(54) **Beschleunigungsmesser zur Messung der Beschleunigung von bewegten Körpern, insbesondere von Flugzeugen (Segelflugzeugen).**

(30) Priorität: **05.07.86 DE 3622724**

(43) Veröffentlichungstag der Anmeldung:
**20.01.88 Patentblatt 88/03**

(45) Bekanntmachung des Hinweises auf die
Patenterteilung:
**04.09.91 Patentblatt 91/36**

(84) Benannte Vertragsstaaten:
**AT BE CH FR GB IT LI LU NL SE**

(56) Entgegenhaltungen:
**DE-A- 2 141 185**
**DE-C- 894 778**
**US-A- 3 479 886**

(73) Patentinhaber: **Blumenauer, Jürgen**
**Krankenhausstrasse 14**
**W-3578 Schwalmstadt 2(DE)**

(72) Erfinder: **Blumenauer, Jürgen**
**Krankenhausstrasse 14**
**W-3578 Schwalmstadt 2(DE)**

(74) Vertreter: **Funck-Hartherz, Anna-Eleonore,**
**Dipl.-Phys.**
**Hoherodskopfstrasse 41**
**W-6000 Frankfurt (Main) 50(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf eine Vorrichtung zur Messung der Beschleunigung von bewegten Körpern, wie z.B. Flugzeugen, insbesondere Segelflugzeugen.

Der erfindungsgemäße Beschleunigungsmesser kann auch zur Bildung eines Totalenergievariometers für Flugzeuge sowie zur Bestimmung der Längs- und Querneigung für Flugzeuge herangezogen werden. Auch die Einstellung eines künstlichen Horizontes ist mit Hilfe des erfindungsgemäßen Beschleunigungsmessers möglich.

Die Beschleunigungsmesser herkömmlicher Art benutzen zum Messen der Beschleunigung b die Trägheit der Masse, die entgegen der Beschleunigungsrichtung eine Kraft proportional dem Produkt aus Beschleunigung b und beschleunigter Masse m hervorruft. Da zusätzlich zu dieser Trägheitskraft das Schwerefeld der Erde auf die Masse einwirkt, muß die Komponente der Schwerkraft in Beschleunigungsrichtung bekannt sein, weil diese Schwerkraftkomponente mit ins Meßergebnis eingeht. Diese Beschleunigungsmesser sind also lageabhängig bezüglich der Schwerefeldrichtung, wenn die Beschleunigung in einer vorgegebenen Richtung gemessen werden soll. Es ist auch schon ein lageunabhängiger Beschleunigungsmesser (DE-C-894 778) bekanntgeworden, der jedoch insofern nachteilig ist, als der Winkel zwischen Beschleunigungsrichtung und Schwerefeldrichtung in das Meßergebnis eingeht. Letztgenannter Beschleunigungsmesser mißt nämlich keine Beschleunigung in einer vorgegebenen Richtung, sondern einen Skalar, nämlich den Betrag der Differenz aus der räumlichen Beschleunigung und der Schwerebeschleunigung. Diese Tatsache ist daraus ersichtlich, daß gemäß dem Meßverfahren der Druck im Mittelpunkt einer flüssigkeitsgefüllten Hohlkugel gemessen wird. Das Meßergebnis vorgenannten Meßverfahrens ist zwar lageunabhängig, aber bei unbekannter Richtung der Schwerebeschleunigung läßt sich die Beschleunigung des bewegten Körpers nicht ermitteln. Mit dem Beschleunigungsmesser gemäß DE-C-894 778 ist es also nicht möglich, die räumliche Beschleunigung in einer vorgegebenen Richtung zu messen, wenn die Richtung des Schwerefeldes nicht bekannt ist.

Zur Beschleunigungsmessung auf herkömmliche Weise muß also die Beschleunigungsrichtung bezüglich eines erdfesten Koordinatensystems genau bekannt sein, was im Flugzeug eine kreiselgestützte Plattform erforderlich macht. Eine kreiselgestützte Plattform, auch künstlicher Horizont, basiert aber auf Kreiselinstrumenten, die in der Herstellung teuer sind, viel Strom verbrauchen, empfindlich auf rauhe Behandlung reagieren und deren Betriebsbereich eingeschränkt ist. Unter diese Art der Beschleunigungsmesser fallen auch solche, bei denen die Messung des Druckgradienten einer horizontalen Flüssigkeitssäule ein Maß für die Beschleunigung in horizontaler Richtung darstellt.

Deshalb werden als Blindfluginstrumente, die einfacher und billiger sind, Wendezeiger herangezogen, die - wie ihr Name schon sagt - die Drehung um die Hochachse anzeigen. Da die Drehung um die Hochachse bei ca. 55° Querneigung maximal ist und der Ausschlag des Wendezeigers bei Querneigung von mehr als ca. 55° wieder rückläufig ist, kann dieses Gerät nur für Querneigungen bis 45° verwendet werden. Ganz ohne Zweifel gibt der künstliche Horizont dem Piloten eine bessere Lageinformation als der Wendezeiger, aber einerseits ist der Einbau kostspielig und andererseits lassen häufige und kräftige Lageveränderungen, wie sie beim Segel-fliegen vorkommen, den künstlichen Horizont rasch verschleißen, so daß die Anzeigegenauigkeit und die Zuverlässigkeit nachlassen, was bei einem Blindflug eine sehr gefährliche Angelegenheit ist (vergl. Helmut Reichmann "Streckenflug", 1. Aufl. 1975 Motorbuchverlag Stuttgart).

Variometer dienen beim Flugzeug zur Messung und Anzeige der Vertikalgeschwindigkeit (Steig- oder Sinkgeschwindigkeit). Totalenergievariometer, und nur die sind für den Piloten von Wichtigkeit, also Variometer, die die Gesamtenergie des Flugzeuges, also die potentielle Energie und die kinetische Energie berücksichtigen, haben allgemein den Vorteil, daß das Hochziehen und Nachdrücken als Energieumwandlung von potentieller Energie in kinetische Energie oder umgekehrt nicht mehr angezeigt wird, so daß unabhängig von irgendwelchen Fahrtänderungen durch Ziehen und Drücken am Instrument abgelesen werden kann, ob das Flugzeug etwa in aufsteigender Luftmasse Energie gewinnen kann oder nicht. Damit ist es erheblich einfacher geworden, Aufwindgebiete als sogenannte Energiegewinnzonen ausfindig zu machen. Bei herkömmlichen Totalenergievariometern, insbesondere für Segelflugzeuge, wird als Meßsignal für die kinetische Energie oder deren zeitliche Veränderung der Staudruck verwendet, der proportional zu der Geschwindigkeit $v^2$ ist, was bei turbulenter Luft zu Fehlanzeigen führt, da Horizontalböen Änderungen der kinetischen Energie des Flugzeuges vortäuschen. Thermisch gutes Wetter ist immer durch unruhige Luft gekennzeichnet; trifft nun eine Horizontalbö das Flugzeug von vorn, so interpretiert das bekannte Totalenergievariometer die Staudruckerhöhung als Energiegewinn und zeigt Steigen an, obwohl das Flugzeug nicht steigt. Da dieser Höhengewinn schlagartig eintritt, mißt das Totalenergievariometer kurzzeitig ein enormes Ansteigen, z.B. von 250 m/s oder mehr. Daher sind alle Totalenergievariometer mit unterschiedlichen Verzögerungssystemen ausgerüstet, die die Anzeige beruhigen, womit aber auch eine Trägheit der Anzeige verbunden ist. Einerseits muß der Pilot - um optimal zu fliegen - in thermisch gutem Wetter schnell fliegen, er muß seine Entscheidungen rasch treffen, wozu er ein schnell reagierendes Totalenergievariometer braucht, andererseits wird die Horizontalböigkeit umso wirksamer als Störfaktor, je schneller der Pilot fliegt, d.h. das Totalenergievariometer muß dann stärker gedämpft werden, damit es überhaupt eine verwertbare Anzeige liefert. Die Totalenergievariometer bedürfen somit einer Verbesserung, da sie unter bestimmten Voraussetzungen, wie soeben beschrieben, unverwertbar werden. Es wurde schon vorgeschlagen, zur Messung der Änderung der Totalenergie des Segelflugzeuges eine Anordnung aus Trägheitsplattform und Beschleunigungsmesser, wie sie in der Verkehrsluftfahrt für die Navigation eingesetzt werden, zu verwenden, aber eine solche Einrichtung ist viel zu aufwendig, um für die Privatfliegerei, insbesondere für Segelflieger, Verwendung finden zu können.

Die Erfindung hat sich somit zur Aufgabe gesetzt, einen lageunabhängigen Beschleunigungsmesser zu schaffen, der auf einfache Art und ohne großen Aufwand eine Messung der Beschleunigung b vornimmt Dieser Beschleunigungsmesser ist darüber hinaus in der Lage, in Verbindung mit einem Höhenvariometer ein einfach herzustellendes und zuverlässiges Totalenergievariometer zu schaffen, welches durch Horizontalböen nicht oder doch fast nicht beeinflußt wird. Auch ist über den Beschleunigungsmesser der Längsneigungswinkel $\alpha$ sowie der Querneigungswinkel $\odot$ des Flugzeuges zu bestimmen.

Zur Lösung dieser Aufgabe schlägt die Erfindung wird einen Beschleunigungsmesser gemäß Anspruch 1 vor. Der Quotient aus dem vom Differenzdruckmesser gemessenen Differenzdruck und dem Abstand L ist bei diesem Beschleunigungsmesser gleich der Druckgradientendifferenz in Meßrichtung von ruhender Luft und von im bewegten Körper befindlicher beschleunigter Luft, und die Druckgradientendifferenz ist ein Maß für die Beschleunigung des bewegten Körpers in Meßrichtung. Der Differenzdruckmesser kann dabei auch als an sich bekannter Strömungsmesser ausgebildet sein. Der erfindungsgemäße Beschleunigungsmesser mißt also, wie später noch exakt bewiesen wird, die räumliche Beschleunigung in einer vorgegebenen Meßrichtung, ohne daß die Schwerefeldrichtung in das Meßergebnis eingeht. Diese Unabhängigkeit des erfindungsgemäßen Beschleunigungsmessers von der Schwerefeldrichtung ist der wesentliche Vorteil für dessen Verwendung in bewegten Körpern, denn hierbei ist das Ermitteln der Schwerefeldrichtung mit großem Aufwand verbunden.

Die beiden Drucksonden sind gemäß der Erfindung derart an einem Flugzeug angebracht, daß die gedachte Verbindungslinie der beiden Drucksonden in oder parallel zur Längsachse oder Querachse verläuft und so ein Maß zur Beschleunigung des Flugzeuges in Richtung der Längsachse oder in Richtung der Querachse darstellt. Die Beschleunigung des bewegten Körpers wird bei dem erfindungsgemäßen Vorschlag nur in der Verbindungsrichtung zwischen den statischen Sonden bzw. den Gesamtdrucksonden gemessen, jedoch unabhängig davon, welche Richtung diese im Raum einnehmen. Maßgebend für die Messung ist die Verbindungslinie der Sonden. In dem Fall, daß die Beschleunigung in Längsachsenrichtung gemessen werden soll, befindet sich vorzugsweise die vordere Drucksonde vor der Rumpfspitze und die hintere hinter dem Rumpfende des Flugzeuges. Bei Messung in Richtung der Querachse sind die Drucksonden an den Flügelenden angebracht.

Der Beschleunigungsmesser gemäß der Erfindung ist einfach und wirkungsvoll im Aufbau und läßt eine exakte Bestimmung der Quer- und Längsbeschleunigung unabhängig von der Komponente $g^*$ der Erdbeschleunigung g in Beschleunigungsrichtung zu. Außerdem kann mit dessen Hilfe ein Totalenergievariometer hergestellt werden, das praktisch horizontalböenunabhängig reagiert. Eine Bestimmung der Längs- und Querneigung bis zu 70$^\circ$ des bewegten Körpers, vornehmlich des Flugzeugs, ist ebenfalls mit dem erfindungsgemäßen Beschleunigungsmesser möglich, wodurch auch ein künstlicher Horizont ohne Einsatz von Kreiselelementen erstellt werden kann, wie später noch beschrieben wird. Dieser künstliche Horizont bietet für den Blindflug mit nur geringem Aufwand einen vollwertigen Ersatz für die bekannte kreiselgestützte Plattform.

Weitere Einzelheiten der Erfindung sind der folgenden Erläuterung sowie der Beschreibung der beigegebenen Zeichnungen zu entnehmen.

Dabei zeigen:

Fig. 1     eine schematische Darstellung des Erfindungsgegenstandes in Verbindung mit einem Segelflugzeug zur Messung der Beschleunigung in Längsrichtung,

Fig. 2     Schaltschema zur Ermittlung der zeitlichen Veränderung der Totalenergie mittels des Erfindungsgegenstandes,

Fig. 3     Schematische Darstellung des Erfindungsgegenstandes in Anwendung auf ein Segelflugzeug zur Messung der Beschleunigung in Querrichtung.

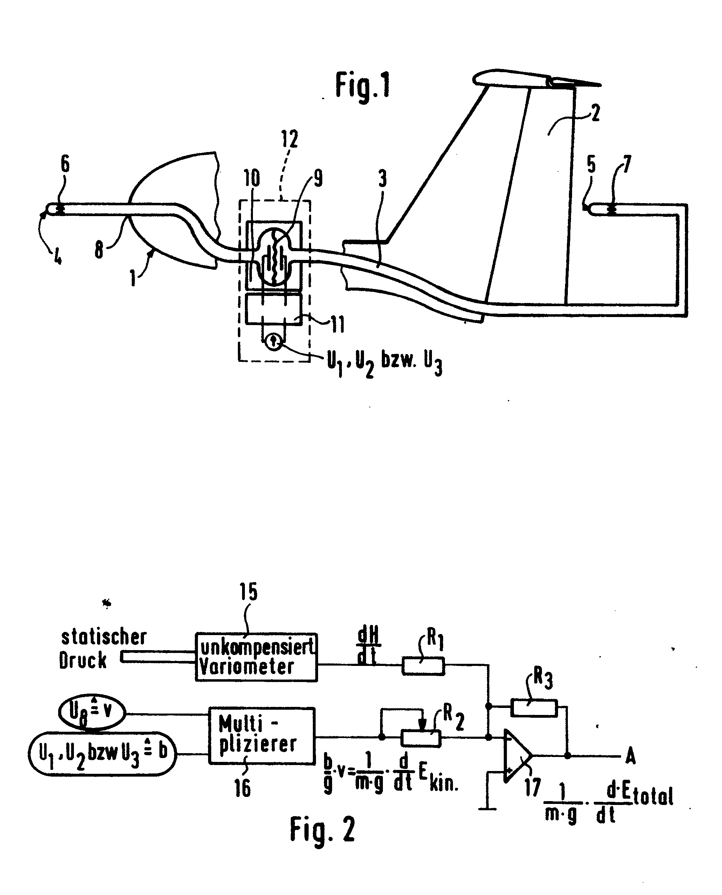

In Fig. 1 ist eine Skizze des Beschleunigungsmessers gemäß der Erfindung gezeigt. In der Skizze zeigt 1 die Rumpfspitze und 2 das Seitenruder. Das Gehäuse der gedachten Luftsäule ist das Rohr 3, dessen

EP 0 253 180 B1

vorderes Ende 4, ebenso wie das hintere Ende 5, geschlossen ist. Das Rohr 3 greift vorzugsweise durch die Belüftungsöffnung 8 an der Flugzeugrumpfspitze. Nächst dem vorderen und hinteren Ende des Rohres 3 sind Drucksonden in Form von Lochkränzen 6 und 7 vorgesehen, die als statische Sonden den statischen Druck ins Rohrinnere übertragen und deren Verbindungsgerade parallel zur Flugzeuglängsachse liegt. Der Verlauf des Rohres 3 zwischen den Lochkranzpunkten kann vollkommen beliebig sein, da dieses Faktum keinen Einfluß auf die Messung nimmt. Zwischen den Lochkranzmeßpunkten ist eine Sperrmembran 9 innerhalb des Rohres angeordnet, wobei es gleichgültig ist, an welcher Stelle die Membran 9 vorgesehen ist; sie muß sich nur zwischen den Lochkranzpunkten innerhalb des Rohres befinden.

Der Druckgradient bei unbeschleunigtem Rohr, d.h. also unbeschleunigter Luftsäule, oder - anders ausgedrückt - bei ruhender Luft beträgt innen und außen in beliebiger Richtung $\rho \cdot g^*$, wenn $\rho$ die Luftdichte und $g^*$ die Komponente der Erdbeschleunigung g in Rohrrichtung ist. Bei beschleunigtem Körper bleibt außen, d.h. in der umgebenden Luft der Ruhedruckgradient $\rho \cdot g^*$ erhalten, während sich in dem bewegten Körper dem Ruhedruckgradient (Änderung des Ruhedruckes) der beschleunigungsabhängige Druckgradient - $\rho \cdot b$ überlagert, welcher durch die Beschleunigung b und die träge Masse der Luft, die sich der Beschleunigung widersetzen will, erzeugt wird. Der innere Druckgradient beträgt somit $\rho \cdot g^* - \rho \cdot b$. Der Außendruck am vorderen Lochkreis sei $p_1$, am hinteren $p_2$, so ergibt sich $\Delta p = p_2 - p_1 = \rho \cdot g^* \cdot L$, wobei L die Länge des Rohres ist. Wenn die Löcher der Lochkränze der statischen Sonden verschlossen sind, so entsteht zwischen den Sonden bei einem Druckgradienten von $\rho \cdot g^* - \rho \cdot b$ ein Druckunterschied

$$\Delta p = ( \rho.g^* - \rho b) L = p_2 - p_1 - \rho \cdot b \cdot L.$$

Werden die Löcher der Lochkränze geöffnet, dann entsteht durch den Druckausgleich auch innen der Druck $p_1$ am vorderen Lochkranz 6 und $p_2$ am hinteren Lochkranz 7. Der Druckunterschied zwischen den beiden Sonden beträgt innen und außen $p_2 - p_1$, jedoch mit der Abweichung, daß innen die Druckdifferenz von $+ \rho \cdot b \cdot L$ als Drucksprung an der Sperrmembran anliegt. Betrachtet man nämlich das Rohrinnere, so setzt sich der Druckunterschied $p_2 - p_1$ zwischen hinterer und vorderer Druckübertragungsstelle aus zwei Anteilen zusammen: aus dem vorläufig unbekannten Drucksprung x an der Sperrmembran und aus dem Integral des rohrinneren Druckgradienten über die Länge L unter Auslassung des Sperrmembrangebietes. Obwohl die Länge des Sperrmembrangebietes im Integrationsweg fehlt, ist das Integral trotzdem gleich dem Produkt aus Druckgradient und L, weil die Länge des Sperrmembrangebietes beliebig kurz gedacht werden kann. Der Wert des Integrales ist also - wie schon früher gezeigt - gleich $p_2 - p_1 - \rho \cdot b \cdot L$. Es gilt also

$$p_2 - p_1 = p_2 - p_1 - \rho \cdot b \cdot L + x$$

Daraus folgt

$$x = \rho \cdot b \cdot L , q.e.d.$$

Dieser an der Sperrmembran anliegende Drucksprung $\rho \cdot b \cdot L$ ist somit eine Meßgröße, die proportional zu der Beschleunigung b und unabhängig von $g^*$ ist, so daß diese Anordnung einen schwerefeldrichtungsunabhängigen Beschleunigungsmesser darstellt. Die Länge L des Rohres ist bekannt, und $\rho$ liegt als Signal in Flugzeugen bereits vor, weil $\rho$ in Streckenflugrechnern zur Ermittlung der Geschwindigkeit v aus dem Staudruck benötigt wird. Es läßt sich somit mit den bereits beschriebenen Maßnahmen ein Signal für die Beschleunigung b ermitteln.

Bei der in Fig. 1 gezeigten Ausführung ist die Sperrmembran 9 die Mittelelektrode des Differentialkondensators 10, der zusammen mit der Kapazitätsdifferenzmeßeinrichtung 11 abhängig von der Durchbiegung der Sperrmembran eine elektrische Spannung $U_1$ gewinnt, die dem $\rho \cdot b \cdot L = const \cdot b$ entspricht. Die Spannung $U_1$, die mit Hilfe der aus dem differenzdruckempfindlichen Differentialkondensator 10 und dem Kapazitätsdifferenzmeßgerät 11 bestehende Differenzdruckmeßeinrichtung 12 gewonnen wird, ist ein direktes Maß für die Beschleunigung b, da - wie schon ausgeführt - die Dichte $\rho$ und die Länge des Rohres L bekannt sind.

Sorgfälig einzuhalten ist die Ausbildung des Rohres nur im Bereich von vor und hinter den Druckübertragungsstellen. Innerhalb des Flugzeugrumpfes darf die Luftsäule, d.h. das Rohr, auch gegebenenfalls als gekrümmter Schlauch weitergeführt werden. Die Länge der Luftsäule ist lediglich gegeben durch den direkten Abstand von der vorderen zur hinteren Druckübertragungsstelle, unabhängig von der Gesamtlänge des Rohres. Die Drucksonden müssen vorne und hinten identische Abmessungen haben, um Fehler auszuschließen. Die vordere Druckübertragungsstelle liegt je nach Länge des vorderen Rohres mehr oder

4

weniger im Staubereich des Rumpfes, so daß sich ein mehr oder weniger großer Staudruckanteil dem vorderen statischen Druck, der an der vorderen Drucksonde gemessen wird, überlagert.

Dieser Staudruckanteil wird durch eine geeignete Maßnahme kompensiert. Gemäß der Erfindung wird von dem sowieso im Flugzeug als elektrische Spannung vorliegenden Staudrucksignal ein geeigneter Anteil dem Spannungssignal $U_1$ überlagert, so daß das resultierende Spannungssignal $U_2$ keinen Staudruckanteil enthält.

Um das Spannungssignal $U_1$ bzw. $U_2$ höhenunabhängig zu machen, wird vorgeschlagen, es mit dem Wert

$$\frac{\varrho\,(\mathrm{NN})}{\varrho}$$

zu multiplizieren, um die Luftdichteabhängigkeit zu eliminieren, wobei $\varrho$ (NN) die Standardluftdichte in NN und $\varrho$ die aktuelle Luftdichte ist. Das dabei entstehende Spannungssignal ist $U_3$. Die Größe

$$\frac{\varrho\,(\mathrm{NN})}{\varrho}$$

ist in streckenfluggerechten modernen Flugzeugen und auch in Segelflugzeugen schon vorhanden und kann von dort bezogen werden.

Mit Hilfe des erfindungsgemäßen Beschleunigungsmessers kann mit nur wenig zusätzlichem Aufwand ein Totalenergievariometer hergestellt werden, welches im Gegensatz zu den herkömmlichen staudruckabhängigen Totalenergievariometern nahezu horizontalböenunempfindlich reagiert, da zur Bestimmung der Totalenergie im wesentlichen die Beschleunigung b gemessen und herangezogen wird und nicht wie bei den bekannten Totalenergievariometern der Staudruck und damit die stark horizontalböenabhängige Geschwindigkeit v bzw. $v^2$.

Das Totalenergievariometer gemäß der Erfindung besteht aus einem konventionellen unkompensierten Höhenvariometer, welches dH/dt ermittelt und einer Schaltung, die mit dem Beschleunigungsmesser gemäß der Erfindung und der sowieso in modernen Segelflugzeugen als elektrische Spannung vorliegenden Geschwindigkeit v ein dem Wert

$$\frac{b\cdot v}{g}$$

entsprechendes Spannungssignal abgibt, sowie einem Addierer, der das Signal dH/dt des konventionellen unkompensierten Variometers mit dem Signal

$$\frac{b\cdot v}{g}$$

addiert.

Dieser erfindungsgemäße Vorschlag wird nachfolgend beschrieben, wobei die herangezogenen Gleichungen so angelegt sind, daß im Ergebnis Dimensionen erscheinen, die dem Piloten, auch dem von Segelflugzeugen, geläufig sind. Die Totalenergie bestimmt sich deshalb aus der Gleichung

$$\frac{1}{m\cdot g}\frac{d}{dt}E_{total} = \frac{1}{m\cdot g}\frac{d}{dt}E_{Kin} + \frac{1}{m\cdot g}\frac{d}{dt}E_{pot}$$

wobei m für die Flugmasse und g für die Schwerefeldstärke der Erde steht. Für die kinetische Energie ergibt sich die Beziehung

$$\frac{1}{m \cdot g} \cdot \frac{d}{dt} E_{kin} = \frac{1}{m \cdot g} \frac{d}{dt} \frac{1}{2} m \cdot v^2 = \frac{b \cdot v}{g}$$

für die potentielle Energie

$$\frac{1}{m \cdot g} \cdot \frac{d}{dt} E_{pot} = \frac{1}{m \cdot g} \frac{d}{dt} m \cdot g \cdot H = \frac{dH}{dt}$$

Für die Ermittlung des kinetischen Steigens oder Sinkens muß also die Beschleunigung b und die Geschwindigkeit v bekannt sein. Die Beschleunigung b wird - wie schon beschrieben - aus der Durchbiegung der Sperrmembran in der Luftsäule bzw. dem Rohr ermittelt, so daß von dem Wert $U_1$, $U_2$ bzw. höhenkorrigiert $U_3$ ausgegangen werden kann. Die Geschwindigkeit v liegt im Flugzeug vor und wird über den Staudruck ermittelt.

Eine mögliche Schaltung zur Durchführung dieses Prozesses unter Verwendung des erfindungsgemäßen Beschleunigungsmessers ist in Fig. 2 gezeigt. Durch das unkompensierte Variometer 15 erhält man über den statischen Druck ein Maß für die zeitliche Änderung der potentiellen Energie dH/dt.

In einem Multiplizierer 16 wird ein der Fluggeschwindigkeit v proportionales Spannungssignal $U_8$ eingegeben sowie das korrigierte oder unkorrigierte Spannungssignal der Beschleunigung $b \triangleq U_1$, $U_2$ bzw. $U_3$ des Beschleunigungsmessers, darin multipliziert sowie durch g geteilt. Danach werden die Ausgangssignale des unkompensierten Variometers und des Multiplizierers einem Addierverstärker 17 zugeführt, so daß am Ausgang A ein der Totalenergie proportionales Spannungssignal $U_9$ liegt, das einem in m/s geeichten Spannungsmesser zugeführt wird.

Aus der Beziehung $\frac{d}{dt} E_{kin} = m \cdot v \cdot b$ erkennt man sofort, daß die Messung der zeitlichen Veränderung der kinetischen Energie im horizontalen Geradeausflug durch Horizontalböen nicht gestört werden kann, da b = 0 ist, denn böenbedingte Geschwindigkeitsänderungen bewirken dann nichts. Selbst wenn die Beschleunigung b im extremen Bahnneigungsflug den Wert von 0,7g annimmt, bewirkt die 0,1 s dauernde 5m/s Bö bei v = 50 m/s, bei einem auf eine Sekunde (1 s) gedämpften Variometer eine Anzeigenänderung von nur 0,35 m/s, wie sich leicht ausrechnen läßt. Da die Beschleunigung b in mehr als 95 % der Flugzeit kleiner als 0,7g ist, kann die Störung des erfindungsgemäßen kompensierten Totalenergievariometers durch Horizontalböen als vernachlässigbar klein betrachtet werden.

Mit Hilfe des erfindungsgemäßen Beschleunigungsmessers kann auch die Längsneigung $\alpha$ des Flugzeuges einfach ermittelt werden, da unter idealen Verhältnissen die Schwerkraftkomponente bei einem sich auf einer geneigten Ebene bewegenden Körper in Ebenenrichtung vollständig zur Kompensation der Trägheitskräfte aufgebracht wird. Daraus folgt, Beschleunigung $b_{ideal} = g^*$ und $g^* = g \cdot \sin\alpha$, und weiterhin gilt die Beziehung $b_{ideal} \triangleq U_1$, $U_2$ bzw. $U_3$. Folglich ist es lediglich erforderlich, das vom Beschleunigungsmesser gewonnene Spannungssignal einem arcsin-Funktionsgenerator eingegeben wird, der ein dem Längsneigungswinkel $\alpha$ entsprechendes Signal $U_4$ erzeugt. Die Beschleunigung $b_{ideal}$ differiert um einen beliebigen Bremsanteil von der realen Beschleunigung $b_{real}$ und zwar deshalb, weil in Wirklichkeit eine Bremsung des sich abwärts bewegenden Körpers erfolgt. Die reale Beschleunigung $b_{real}$ ist also um die Bremsverzögerung $b_{brems}$ kleiner als $b_{ideal}$, so daß sich für die korrigierte ideale, d.h. die reale Beschleunigung folgende Beziehung ergibt:

$$\sin\alpha = \frac{b_{real} + b_{brems}}{g}$$

Die Verzögerung $b_{brems}$ wird mit einem konventionellen Verzögerungsmesser gemessen und in ein Spannungssignal $U_{con}$ umgesetzt; $b_{real}$ wird von dem erfindungsgemäßen Beschleunigungsmesser gewonnen und in die Spannung $U_1$, $U_2$ bzw. $U_3$ umgesetzt. Diese beiden Spannungssignale werden elektrisch addiert, und das daraus gebildete Spannungssignal $U_{con} + U_1$, $U_2$ bzw. $U_3$ einem arcsin-Funktionsgenerator

EP 0 253 180 B1

eingegeben, der ein dem Längsneigungswinkel $\alpha$ entsprechendes Signal $U_4$ cor erzeugt.

Wird der erfindungsgemäße Beschleunigungsmesser nicht in oder parallel zur Längsrichtung, sondern in oder parallel zur Querrichtung des Flugzeuges, also quer zur Flugrichtung angeordnet, so kann über die statischen Sonden, die entsprechend im Bereich der rechten und linken Tragflügelspitze angeordnet sind, die Querneigung des Flugzeuges in gleicher Weise wie auch die Längsneigung ermittelt werden.

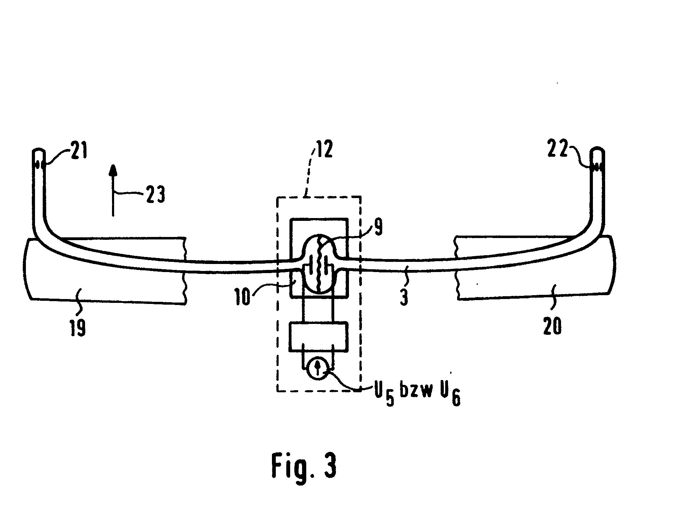

Diese Anordnung ist in Fig. 3 skizziert. In Fig. 3 sind die Teile, die denen der Fig. 1 entsprechen, mit den gleichen Bezugszeichen versehen. Das linke Tragflügelende ist mit 19, das rechte mit 20 bezeichnet und der linke Lochkranz der Druckmeßsonde mit 21 sowie der rechte mit 22. Das mit dem erfindungsgemäßen Beschleunigungsmesser ausgerüstete Flugzeug fliegt in der durch den Pfeil 23 gekennzeichneten Richtung. Das über die Differenzdruckmeßeinrichtung 12 abhängig von der Durchbiegung der Sperrmembran 9 gewonnene Spannungssignal $U_5$ wird zur Ermittlung des Querneigungswinkels $\odot$ entsprechend dem Längsneigungswinkel $\alpha$ herangezogen. Dieses Signal $U_5$ kann durch Multiplikation von

$$\frac{\rho \, (NN)}{\rho}$$

zu $U_6$-höhenkorrigiert werden. Das Spannungssignal $U_6$ wird einem arcsin-Funktionsgenerator eingegeben, der ein dem Querneigungswinkel $\odot$ entsprechendes Signal $U_7$ erzeugt. Der auf diese Weise ermittelte Querneigungswinkel $\odot$ berücksichtigt allerdings nicht die durch Bremsung erfolgte Verzögerung, wozu - genau wie bei der Ermittlung des Längsneigungswinkels - ein konventioneller Beschleunigungsmesser zusätzlich angeordnet werden muß, allerdings auch in oder parallel zur Querachse verlaufender Richtung, da nur damit die Querbeschleunigung des Flugzeuges, die benötigt wird, erhalten werden kann. Die Ausgangsspannung des konventionellen Beschleunigungsmessers ist zu $U_6$ zu addieren.

Mit bekanntem Längsneigungswinkel $\alpha$ und Querneigungswinkel $\odot$ läßt sich eine Ebene mit Stellmotoren so steuern, daß diese Ebene immer parallel zur Horizontalebene steht. Diese Ebene kann dann im Blindflug als künstlicher Horizont verwendet werden. Die erfindungsgemäße Lösung der Bildung eines künstlichen Horizontes ist sehr viel einfacher und auch weniger kostspielig als die bisher bekannte Lösung bei Verwendung von Kreiselinstrumenten. Montiert man auf diese Ebene einen beschleunigungsunabhängigen Kompaß, so zeigt dieser unabhängig von der Lage des Flugzeuges magnetisch Nord richtig an. Zu diesem Zweck wird eine im Flugzeug angebrachte, in Flugzeuglängsachsenrichtung und in Querachsenrichtung drehbar gelagerte Plattform vorgesehen und an beiden Drehachsen mit Drehwinkelgebern und Stellmotoren ausgerüstet. Diese Plattform wird um die Querachse um den Längsneigungswinkel $\alpha$ invers gedreht und um die Längsachse um den Querneigungswinkel $\odot$ invers gedreht, so daß die Ebene der Plattform unabhängig von der Lage des Flugzeuges parallel zur Erdoberfläche bleibt.

## Patentansprüche

1.  Beschleunigungsmesser zur Messung der Beschleunigung von bewegten Körpern in einer bestimmten Meßrichtung, insbesondere von Segelflugzeugen,
    **dadurch gekennzeichnet,**
    daß zwei im Abstand L voneinander, mit ihrer gedachten Verbindungslinie parallel zur Meßrichtung außen am bewegten Körper angebrachte Drucksonden (6, 7), die als an sich bekannte statische Drucksonden oder als Gesamtdrucksonden ausgeführt sein können und in möglichst ungestörter Strömung und möglichst genau gleich ausgerichtet sind, mit einem an sich bekannten Differenzdruckmesser (12) verbunden sind, wobei das Ausgangssignal des Differenzdruckmessers ein Maß für die Beschleunigung ist.

2.  Beschleunigungsmesser nach Anspruch 1,
    **dadurch gekennzeichnet,**
    daß ein Rohr (3) vorgesehen ist, nächst dessen Anfang und Ende je eine Drucksonde (6, 7) vorgesehen ist, wobei zwischen den Drucksonden eine Sperrmembran (9) vorgesehen ist.

3.  Beschleunigungsmesser nach Anspruch 2,
    **dadurch gekennzeichnet,**
    daß die Drucksonden als Lochkränze (6, 7) nächst dem vorderen und hinteren Ende des Rohres ausgebildet sind und das vordere und hintere Ende des Rohres (3) geschlossen ist.

4.  Beschleunigungsmesser nach Anspruch 1,

7

**dadurch gekennzeichnet,**
daß der Differenzdruckmesser (12) als an sich bekannter Strömungsmesser ausgebildet ist.

5. Beschleunigungsmesser nach Anspruch 1,
   **dadurch gekennzeichnet,**
   daß die beiden Drucksonden (6, 7) derart an einem Flugzeug angebracht werden, daß die gedachte Verbindungsgerade der beiden Drucksonden (6, 7), wobei die vordere Drucksonde (6) vor der Rumpfspitze und die hintere Drucksonde (7) hinter dem Rumpfende angebracht ist, in oder parallel zur Längsache des Flugzeuges verläuft.

6. Beschleunigungsmesser nach Anspruch 3,
   **dadurch gekennzeichnet,**
   daß die Sperrmembran (9) als Mittelelektrode eines differenzdruckempfindlichen Differentialkondensators (10) geschaltet ist und über ein Kapazitätsdifferenzmeßgerät (11) ein Spannungssignal $U_1$ aufzeigt, das proportional der Beschleunigung b ist.

7. Beschleunigungsmesser nach Anspruch 6,
   **dadurch gekennzeichnet,**
   daß von dem im Flugzeug als elektrische Spannung vorliegenden Staudrucksignal ein geeigneter Anteil dem Spannungssignal $U_1$ überlagert wird, so daß das resultierende Spannungssignal $U_2$ keinen Staudruckanteil mehr enthält.

8. Beschleunigungsmesser nach Anspruch 6,
   **dadurch gekennzeichnet,**
   daß das Spannungssignal $U_1$ bzw. $U_2$ zur Höhenkorrektur mit dem Wert

$$\frac{\rho\,(NN)}{\rho}$$

zu $U_3$ multipliziert wird.
  $\rho$ (NN)    Standardluftdichte bei Normalnull
  $\rho$         aktuelle Luftdichte

9. Beschleunigungsmesser nach Anspruch 6, 7 und 8,
   **dadurch gekennzeichnet,**
   daß dessen Ausgangsspannung $U_1$, $U_2$ bzw. $U_3$ = b in einen Schaltkreis gegeben wird, der das Geschwindigkeitssignal $U_8 \triangleq v$ führt und dieses mittels eines Multiplizierers mit vorgenannter Ausgangsspannung multipliziert wird, und das daraus resultierende Signal über einen Addierer mit einem der Zeitlichen Änderung der Höhe dH/dt proportional Ausgangssignal eines unkompensierten Variometers addiert ist, so daß als Endsignal

$$U_9 = \frac{1}{mg}\frac{d}{dt}E_{total} = \frac{1}{mg}\frac{d}{dt}E_{kin} + \frac{1}{mg}\frac{d}{dt}E_{pot}$$

gilt.
  $E_{total}$   Gesamtenergie
  $E_{kin}$     kinetische Energie
  $E_{pot}$     potentielle Energie
  m             Masse
  g             Erdbeschleunigung

10. Beschleunigungsmesser nach einen der Ansprüche 6, 7 und 8,
    **dadurch gekennzeichnet,**
    daß das Signal $U_1$, $U_2$ bzw. $U_3 \triangleq b = g^* = g \cdot \sin \propto$ einem arcsin-Funktionsgenerator eingegeben wird, der ein dem Längsneigungswinkel $\alpha$ entsprechendes Signal $U_4$ erzeugt.

U₁ - U₄     verschiedene Spannungen

α     Längsneigungswinkel des bewegten Körpers

b     Beschleunigung

$g^*$     $g \cdot \sin\alpha$

g     Normerdbeschleunigung

**11.** Beschleunigungsmesser nach Anspruch 10,
**dadurch gekennzeichnet,**
daß zu dem Signal $U_1$, $U_2$ bzw. $U_3$ das Spannungssignal $U_{con}$ eines konventionellen Beschleunigungsmessers elektrisch addiert und das Signal $U_{con} + U_1$, $U_2$ bzw. $U_3$ einem arcsin-Funktionsgenerator eingegeben wird, der ein dem Längsneigungswinkel entsprechendes Signal $U_{4cor}$ erzeugt.

**12.** Beschleunigungsmesser nach Anspruch 1,
**dadurch gekennzeichnet,**
daß die beiden Drucksonden (6, 7) derart an einem Flugzeug angebracht werden, daß die gedachte Verbindungsgerade der beiden Drucksonden (6, 7) in oder parallel zur Querachse des Flugzeuges verläuft und so ein Maß für die Beschleunigung des Flugzeuges in Richtung der Querachse gewonnen wird.

**13.** Beschleunigungsmesser nach Anspruch 12,
**dadurch gekennzeichnet,**
daß als Differenzdruckmesser eine Anordnung wie in Anspruch 7 verwendet wird, so daß die Ausgangs-spannung $U_5$ ein Maß für die Querbeschleunigung des Flugzeuges ist.

**14.** Beschleunigungsmesser nach Anspruch 12 oder 13,
**dadurch gekennzeichnet,**
daß das Spannungssignal $U_5$ durch Multiplikation mit

$$\frac{\rho(NN)}{\rho}$$

zu $U_6$ höhenkorrigiert ist.

    $\rho$ (NN)     Standardluftdichte bei Normalnull

    $\rho$     aktuelle Luftdichte

**15.** Beschleunigungsmesser nach Anspruch 13 oder 14,
**dadurch gekennzeichnet,**
daß zu dem Signal $U_5$ bzw. $U_6$ das Signal $U_{con}$ eines konventionellen, ebenfalls in oder parallel zur Querachse angeordneten Beschleunigungsmessers elektrisch addiert und einem arcsin-Funktionsgenerator eingegeben wird, der ein dem Querneigungswinkel entsprechendes Signal $U_7$ erzeugt.

**16.** Verwendung des Beschleunigungsmessers als künstlicher Horizont nach Ansprüche 10, 11 und 15,
**dadurch gekennzeichnet,**
daß eine im Flugzeug angebrachte, in Flugzeuglängsachsenrichtung und in Querachsenrichtung drehbar gelagerte und an beiden Drehachsen mit Drehwinkelgebern und Stellmotoren ausgerüstete Plattform um die Querachse um den vom Beschleunigungsmesser nach Anspruch 10 oder 11 gelieferten Winkel α invers gedreht und um die Längsachse um den vom Beschleunigungsmesser nach Anspruch 11 gelieferten Winkel ө invers gedreht wird, so daß die Ebene der Plattform unabhängig von der Lage des Flugzeuges parallel zur Erdoberfläche bleibt.

**Claims**

**1.** An accelerometer for measuring the acceleration of moved bodies in a predetermined measuring direction, in particular, of gliders, characterized in that two pressure probes (6,7) at a space L from one another provided with their imaginary connecting line in parallel to the measuring direction externally of the moved body, which pressure probes may be in the form of known per se static pressure probes or general pressure probes and in substantially undisturbed flow and in substantially precise identical alignment are in communication with a known per se differential pressure meter (12), with the output signal of the pressure differential meter being a measurement for the acceleration.

2. An accelerometer according to claim 1, characterized in that a tube (3) is provided next to the beginning and to the end of which is respectively located a pressure probe (6,7), with a blocking diaphragm (9) being disposed between the pressure probes.

3. An accelerometer according to claim 2, characterized in that the pressure probes are configured as perforated rings (6,7) provided next to the front and rear ends of the tube, and that the front and rear ends of the tube (3) are closed.

4. An accelerometer according to claim 1, characteirzed in that the differential presssure meter (12) is configured as a knwon per se flow meter.

5. An accelerometer according to claim 1, characterized in that the two pressure probes (6,7) are provided on an airplane so as to cause the imaginary connecting straightline of the two pressure probes (6,7) to extend in or in parallel to the longitudinal axis of the airplane, with the front-sided pressure probe (6) being located ahead of the body tip and the rear-sided pressure probe being provided behind the tail.

6. An accelerometer according to claim 3, characterized in that the blocking diaphragm (9) is connected as a central electrode of a differential capacitor (10) responsive to the differential pressure, indicating, through a capacity differential meter (11), a potential signal $U_1$ which is in proportion to the acceleration b.

7. An accelerometer according to claim 6, characterized in that a suitable share of the dynamic pressure signal available in the airplane in the form of an electric voltage is superposed to the potential signal $U_1$ so that the resultant potential signal $U_2$ no longer contains a dynamic pressure portion.

8. An accelerometer according to claim 6, characterized in that the potential signal $U_1$ and $U_2$ respectively, is multiplied by the value

$$\frac{\rho(NN)}{\rho}$$

to $U_3$ for altitude correction.

$\rho$ (NN)-Standard Air Density Mean Sea Level
$\rho$ - Actual Air Density

9. An accelerometer according to claims 6,7 and 8, characterized in that the output voltage $U_1$, $U_2$ and $U_3$ = b thereof is supplied to a circuit carrying the speed signal $U_8 \triangleq v$ and that the same is multiplied by a multiplier by the afore-mentioned output voltage, and the resultant signal, through an adder, is added to an output signal of a non-compensated variometer proportional to the timely change in altitude dH/dt so that the end signal is

$$U_9 = \frac{1}{mg}\frac{d}{dt}E_{total} \quad \frac{1}{mg}\frac{2}{dt}E_{kin} + \frac{1}{mg}\frac{d}{dt}E_{pot}$$

| | |
|---|---|
| $E_{total}$ | total energy |
| $E_{kin}$ | kinetic energy |
| $E_{pot}$ | potential energy |
| m | ground |
| g | gravitational acceleration |

10. Accelerometer according to any one of claims 6,7 and 8, characterized in that the signal $U_1$ $U_2$ and $U_3$,

$\hat{=} b = g^* = g.\sin \alpha$ is supplied to an arcsin function generator generating a signal $U_4$ corresponding to the longituinal angle of inclination $\alpha$.

$U_1 - U_4$    various voltages

$\alpha$        longituinal angle of inclination of the moved body

b        acceleration

$g^*$        g . sin

g        normal gravitational acceleration

**11.** An accelerometer according to claim 10, characteriezd in that electrically added to the signal $U_1$ , $U_2$, and $U_3$, respectively, is the potential signal $U_{con}$ of a conventional accelerometer, with the signal $U_{con}$ + $U_1$ $U_2$ and $U_3$ respectively, being supplied to an arcsin function generator generating a signal $U_{cor}$ corresponding to the longitudinal angle of inclination.

**12.** An accelerometer according to claim 1, characterized in that the two pressure probes (6,7) are provided on an airplane in a manner that the imaginary connecting straight-line of the two pressure probes (6,7) extends in or in parallel to the transverse axis of the airplane, thereby attaining a measurement for the acceleration of the airplane in the direction of the transverse axis.

**13.** An accelerometor according to claim 12, characterized in that the diffferential pressure meter is an arrangement of the type as used in claim 7, so that the output voltage $U_5$ is a measurement for the transverse acceleration of the airplane.

**14.** An accelerometor according to claims 12 or 13, characterized in that the potential signal $U_5$ can be altitude-adjusted by multiplication by

$$\frac{\rho\ \ NN}{\rho}$$

to $U_6$.

Standard Air Density at Mean Sea Level
Actual Air Density

**15.** An accelerometer according to claims 13 or 14, characterized in that electrically added to the signal $U_5$ and to the signal $U_6$ respectively, is signal $U_{con}$ of a conventional accelerometer equally extending in or in parallel to the transverse axis, and is supplied to a arcsin function generator generating a signal $U_7$ corresponding to the transverse inclination angle.

**16.** The use of the accelerometer as an artificial horizon according to any one of claims 10,11 and 15, characterized in that a platform provided in the airplane and rotatably disposed in the direction of the longitudinal axis of the airplane and in the direction of the transverse axis and, at both axes of rotation, furnished with rotation angle generators and servomotors, is inversely rotated about the transverse axis by angle $\alpha$ provided by the accelerometer according to claims 10 and 11, and is inversely rotated about the longitudinal axis by angle $\ominus$ provided by the accelerometer according to claim 11, such that the plane of the platform, irrespective of the position of the airplane, remains in a position parallel to the ground surface.

**Revendications**

**1.** Accéléromètre pour la mesure de l'accélération de corps en mouvement dans un sens de mesure défini, notamment de planeurs,
caractérisé par le fait que
deux sondes de pression (6, 7) sont montées à l'extérieur sur des corps en mouvement à un écartement L entre elles avec leur ligne de jonction parallèle au dispositif de mesure, ces sondes pouvant être des sondes de pression statique connues ou des sondes de pression totale dans un courant d'air si possible non perturbé et devant présenter si possible le même alignement, lesquelles sont reliées à un instrument de mesure de la pression différentielle connu (12), le signal de sortie de l'instrument de pression différentiel représentant une grandeur pour l'accélération.

2. Accéléromètre selon la revendication 1,
caractérisé par le fait
qu'un tuyau (3) est prévu avec une sonde de pression (6, 7) proche de ses extrémités, une membrane d'arrêt (9) étant envisagée entre les deux sondes de pression.

3. Accéléromètre selon la revendication 2,
caractérisé par le fait que
les sondes de pression constituent des couronnes perforées (6, 7) à proximité de l'extrémité avant et arrière du tuyau et que l'extrémité avant et arrière du tuyau (3) est fermée.

4. Accéléromètre selon la revendication 1,
caractérisé par le fait que
l'instrument de mesure de pression différentielle (12) constitue une ailette hydrométrique connue.

5. Accéléromètre selon la revendication 1,
caractérisé par le fait que
les deux sondes (6, 7) sont montées sur un avion de manière que la droite de jonction des deux sondes de pression (6, 7) soit dans le sens ou parallèle à l'axe longitudinal de l'avion, la sonde de pression avant (6) étant montée à la pointe du fuselage et la sonde de pression arrière (7) derrière l'extrémité du fuselage.

6. Accéléromètre selon la revendication 3,
caractérisé par le fait que
la membrane d'arrêt (9) est montée comme électrode centrale d'un condensateur différentiel (10) sensible à la pression différentielle et qu'elle indique un signal de tension U1 par un instrument de mesure de différence de capacité (11), ce signal étant proportionnel à l'accélération b.

7. Accéléromètre selon la revendication 6,
caractérisé par le fait que
le signal de pression dynamique provenant de l'avion comme tension électrique est superposé par une part appropriée au signal de tension U1 de sorte que le signal de tension U2 obtenu ne contienne plus de part de pression dynamique.

8. Accéléromètre selon la revendication 6,
caractérisé par le fait que
le signal de tension U1 ou U2 est multiplié par U3 avec la valeur

$$\frac{\rho \, (NN)}{\rho}$$

pour la correction de l'altitude.

$\rho$ (NN) densité d'air standard au niveau de la mer
Densité d'air actuelle $\rho$

9. Accéléromètre selon les revendications 6, 7 et 8
caractérisé par le fait que
sa tension de sortie U1, U2 ou U3 = b est donnée dans un circuit de commutation qui comporte le signal de vitesse U8 = v et que ce signal est multiplié par un multiplicateur avec la tension de sortie indiquée et que le signal qui en résulte est additionné par un totaliseur avec un signal de sortie proportionnel à la modification de l'altitude dH/dt d'un variomètre non compensé pour obtenir le signal final suivant:

$$U9 = \frac{1}{m.g} \frac{d}{dt} E_{total} = \frac{1}{mg} \frac{d}{dt} E_{cin} + \frac{1}{mg} \frac{d}{dt} E_{pot}$$

E totale     Energie totale
E cin     Energie cinétique
E pot     Energie potentielle
m     Masse
g     Accélération de la terre

**10.** Accéléromètre selon l'une des revendications 6, 7 et 8,
caractérisé par le fait que
le signal U1, U2 ou U3 $\hat{=}$ b = g$^*$ = g . sin $\alpha$ est entré dans un générateur de fonction arcsin qui génère un signal U4 correspondant à l'angle d'inclinaison longitudinal $\alpha$ .

U1 - U4     Diverses tensions
$\alpha$     Angle d'inclinaison longitudinal du corps en mouvement
b     Accélération
g$^*$     g . sin
g     Accélération normale de la terre

**11.** Accéléromètre selon la revendication 10,
caractérisé par le fait que
le signal de tension U con d'un accéléromètre conventionnel est électriquement ajouté au signal U1, U2 ou U3 et que le signal U con + U1, U2 ou U3 est entré dans un générateur de fonction arcsin qui génère le signal U4 cor correspondant à l'angle d'inclinaison longitudinal.

**12.** Accéléromètre selon la revendication 1,
caractérisé par le fait que
les deux sondes de pression (6, 7) sont montées sur un avion de sorte que la droite de jonction des deux sondes de pression (6, 7) est dans le sens ou parallèle à l'axe transversal de l'avion et permet ainsi d'obtenir une grandeur pour l'accélération de l'avion dans le sens de l'axe transversal.

**13.** Accéléromètre selon la revendication 12,
caractérisé par le fait
qu'un montage comme celui de la revendication 7 est utilisé comme instrument de mesure de pression différentielle de sorte que la tension de sortie U5 est une grandeur pour l'accélération transversale de l'avion.

**14.** Accéléromètre selon la revendication 12 ou 13,
caractérisé par le fait que
le signal de tension U5 est corrigé en altitude par multiplication avec

$$\frac{\rho \ (NN)}{\rho}$$

par U6.
$\rho$ (NN)     Densité d'air standard au niveau de la mer
$\rho$     Densité d'air actuelle

**15.** Accéléromètre selon la revendication 13 ou 14,
caractérisé par le fait que
le signal U con d'un accéléromètre conventionnel également monté dans le sens ou parallèle à l'axe transversal est additionné électriquement au signal U5 ou U6 et que la valeur est entrée dans un générateur de fonction arcsin qui génère un signal U7 correspondant à l'angle d'inclinaison transversal.

**16.** Utilisation de l'accéléromètre comme horizon artificiel selon les revendications 10, 11 et 15 caractérisée par le fait

qu'une plate-forme équipée de générateurs d'angles de rotation et de moteurs d'asservissement sur deux axes de giration et rotative dans le sens de l'axe longitudinal de l'avion et dans le sens de l'axe transversal est montée dans l'avion et qu'elle est inversée de l'angle $\alpha$ fourni par l'accéléromètre selon revendication 10 ou 11 autour de l'axe transversal et également inversee de l'angle $\theta$ fourni par l'accéléromètre selon revendication 11 autour de l'axe longitudinal de manière que le niveau de la plate-forme reste parallèle à la surface de la terre indépendamment de l'emplacement de l'avion.

Fig.1

$U_1$, $U_2$ bzw. $U_3$

statischer
Druck

unkompensiert
Variometer

15

$\frac{dH}{dt}$

$R_1$

$U_\beta \hat{=} v$

$U_1$, $U_2$ bzw $U_3 \hat{=} b$

Multiplizierer

16

$\frac{b}{g} \cdot v = \frac{1}{m \cdot g} \cdot \frac{d}{dt} E_{kin.}$

$R_2$

$R_3$

17

A

$\frac{1}{m \cdot g} \cdot \frac{d \cdot E_{total}}{dt}$

Fig. 2

**Fig. 3**